# EUROPEAN PATENT APPLICATION

(11) **EP 4 091 986 A1**
(43) Date of publication of application: **23.11.2022**
(21) Application number: 22174693.6
(22) Date of filing: 20.05.2022
(51) Int. Cl.: B67D 1/07, B67D 1/12

(54) **BEER LINE DISPENSING AND CLEANING SYSTEM**

(30) Priority: 20.05.2021 IE S20210111
(71) Applicant: Hartmann, Frank, N39 Y335 Ardagh County, Longford (IE)
(72) Inventor: Hartmann, Frank, N39 Y335 Ardagh County, Longford (IE)
(74) Representative: Schütte, Gearoid

(57) **Abstract**

A beer line dispensing and cleaning system (1) has a keg tapping head (2) for connection to an outlet (3) of a beer keg (4). A beer dispensing line (5) is connected between the keg tapping head (2) and a beer dispensing tap (6). An electrolytic ozone generator (7) has a water inlet (8) for connection to a water supply and an ozone water outlet (9) for connection by an ozone water line (10) to the beer dispensing line (5) for delivery of ozone water through the beer dispensing line (5) to sanitize the beer dispensing line (5).

## Description

### Introduction

This invention relates to a beer line dispensing and cleaning system.

### Background of the Invention

Conventionally, beer lines are cleaned by a brewery contract firm that goes to a pub every 20-25 days and sanitises the beer lines until the next schedule. The contractor empties the beer from the line and uses water to rinse out the line. Then chemicals are mixed up in a separate container and pumped into the beer line. This chemical solution has to sit in the beer line for about 15-20 minutes or until line is clean. After the chemicals have done their job, the chemicals have to be emptied from the line and the line flushed through with clean water several times until the line is free from chemical residue.

The present invention is directed towards providing an improved beer line dispensing and cleaning system.

Various known beverage line cleaning systems are disclosed in WO 2009028845 A1, KR 20120103390 A, US 2004245281 A1, and US 5636763 A.

### Summary of the Invention

According to the invention, there is provided a beer line dispensing and cleaning system comprising:
a keg tapping head for attachment to a beer keg outlet,
a beer dispensing line connected between the keg tapping head and a beer dispensing tap,
an ozone generator having a water inlet for connection to a water supply and an ozone water outlet for connection by an ozone water line to the beer dispensing line for delivery of ozone water through the beer dispensing line.

In one embodiment of the invention, a selector valve is mounted in the beer dispensing line, the selector valve having a first inlet connected to the keg tapping head, the selector valve having a second inlet connected to the ozone generator by the ozone water line, and the selector valve having an outlet connected to the beer dispensing tap.

In another embodiment, the ozone water fine is connected to a cleaning socket which is engagable with the keg tapping head.

In another embodiment, a flowmeter is mounted in the beer dispensing line.

In another embodiment, the flowmeter is mounted in the beer dispensing line between the selector valve and the beer dispensing tap.

In another embodiment, the flowmeter is connected to a remote display unit.

In a further embodiment, a first fob detector is mounted in the beer dispensing line between the keg tapping head and the selector valve,

In another embodiment, the first fob detector is mounted at the first inlet of the selector valve.

In another embodiment, a second fob detector is mounted in the ozone water line between the ozone generator and the selector valve.

In another embodiment, the second fob detector is mounted at the second inlet of the selector valve.

In another embodiment there is provided a beer line dispensing and cleaning system comprising:
a keg tapping head for attachment to a beer keg outlet,
a beer dispensing line connected between the keg tapping head and a beer dispensing tap,
an ozone generator having a water inlet for connection to a water supply and an ozone water outlet for connection by an ozone water line to the beer dispensing line for delivery of ozone water through the beer dispensing line,
a selector valve mounted in the beer dispensing line, the selector valve having a first inlet connected to the keg tapping head by the beer dispensing line, the selector valve having a second inlet connected to the ozone generator by the ozone water line, and the selector valve having an outlet connected to the beer dispensing tap by the beer dispensing line,
the selector valve being switchable between a first operating position in which the first inlet of the selector valve is connected to the outlet of the selector valve and a second operating position in which the second inlet of the selector valve is connected to the outlet of the selector valve,
a first fob detector mounted in the beer dispensing line between the keg tapping head and the selector valve, and
a second fob detector mounted in the ozone water line between the ozone generator and the selector valve.

In another embodiment there is provided a beer line dispensing and cleaning system for mounting in a beer dispensing line, comprising:
an ozone generator having a water inlet for connection to a water supply and an ozone water outlet for connection by an ozone water line to the beer dispensing line for delivery of ozone water through the beer dispensing line,
a selector valve for mounting in the beer dispensing line, the selector valve having a first inlet for connection to a beer keg by the beer dispensing line, the selector valve having a second inlet connected to the ozone generator by the ozone water line, and the selector valve having an outlet for connection to a beer dispensing tap by the beer dispensing line,
the selector valve being switchable between a first operating position in which the first inlet of the selector valve is connected to the outlet of the selector valve and a second operating position in which the second inlet of the selector valve is connected to the outlet of the selector valve,
a first fob detector mounted at the first inlet of the selector valve, and
a second fob detector mounted at the second inlet of the selector valve.

### Brief Description of the Drawings

The invention will be more clearly understood from the following description of some embodiments thereof, given by way of example only, with reference to the accompanying drawings, in which:

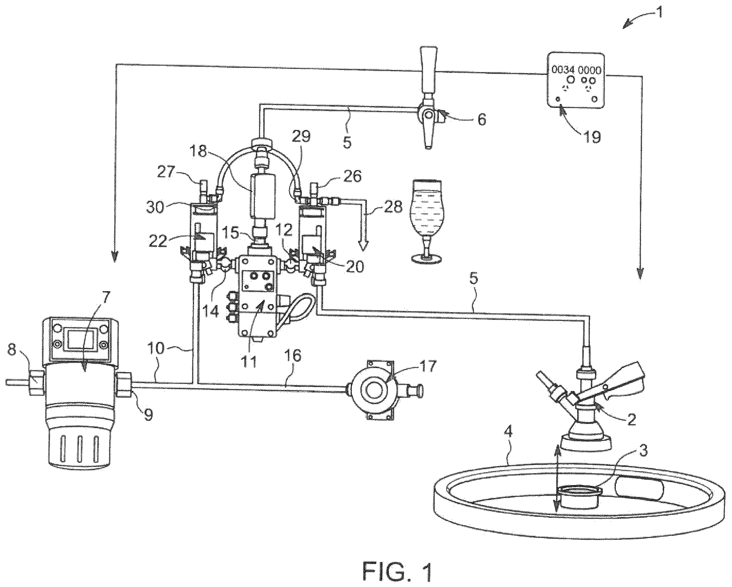

Fig. 1 is a schematic illustration of a beer line dispensing and cleaning system according to the invention, shown in normal beer dispensing mode; and
Fig. 2 is a schematic illustration, similar to Fig. 1, showing the beer line dispensing and cleaning system in cleaning mode.

### Detailed Description of the Preferred Embodiments

Referring to the drawings, there is illustrated a beer line dispensing and cleaning system according to the invention, indicated generally by the reference numeral 1. The system 1 has a keg tapping head 2 for connection to an outlet 3 of a beer keg 4. A beer dispensing line 5 is connected between the keg tapping head 2 and a beer dispensing tap 6. An electrolytic ozone generator 7 has a water inlet 8 for connection to a water supply, such as a mains water supply, and an ozone water outlet 9 for connection by an ozone water line 10 to the beer dispensing line 5 for delivery of ozone water through the beer dispensing line 5.

A selector valve 11 is mounted in the beer dispensing line 5. The selector valve 11 has a first inlet 12 connected to the keg tapping head 2 by a first portion 23 of the beer dispensing line 5. A second inlet 14 of the selector valve 11 is connected to the electrolytic ozone generator 7 by the ozone water line 10. An outlet 15 of the selector valve 11 is connected to the beer dispensing tap 6 by a second portion 24 of the beer dispensing line 5.

The selector valve 11 is switchable between a first operating position in which the first inlet 12 of the selector valve 11 is connected to the outlet 15 of the selector valve 11 and a second operating position in which the second inlet 14 of the selector valve 11 is connected to the outlet 15 of the selector valve 11.

A branch line 16 of the ozone water line 10 is connected to a cleaning socket 17 which is engagable with the keg tapping head 2. At least portion of this branch line 16 may be flexible to facilitate connection to and release from the keg tapping head 2. Alternatively, or in addition, a portion of the beer dispensing line 5 to which the keg tapping head 2 is attached may be flexible to facilitate the interconnection of the cleaning socket 17 and the keg tapping head 2.

A flowmeter 18 is mounted in the beer dispensing line 5. In this case, the flowmeter 18 is mounted in the second portion 24 of the beer dispensing line 5 communicating between the outlet 15 of the selector valve 11 and the beer dispensing tap 6. The flowmeter 18 is mounted at the outlet 15 of the selector valve 11 and is connected to a remote display unit 19.

A first fob detector 20 is mounted in the beer dispensing line 5 between the keg tapping head 2 and the selector valve 11. Conveniently, the first fob detector 20 may be mounted at the first inlet 12 of the selector valve 11. A second fob detector 22 is mounted in the ozone water line 10 between the electrolytic ozone generator 7 and the selector valve 11. In this case, the second fob detector 22 is mounted at the second inlet 14 of the selector valve 11. The first fob detector 20 has a vent 26 and the second fob detector 22 has a vent 27. Each fob detector 20, 22 can discharge to a waste line 28 from outlets 29, 30 at a top of each fob detector 20, 22.

The ozone generator 7, selector valve 11, first fob detector 20, second fob detector 22, flowmeter 18 and display unit 19 are connected to a controller for controlling operation of the various components and switching the system 1 between a beer dispensing mode and a cleaning mode.

In use, power supply to the various components of the system 1 is switched on. A full beer keg 4 is connected by the keg tapping head 2 and via the beer dispensing line 5 with the first fob detector 20. The first fob detector 20 is vented to evacuate any trapped air. The vent 26 of the first fob detector 20 is pressed to expel gas from the beer to fill the sight glass in the first fob detector 20. The second fob detector 22 is vented to flush and sanitize the vent tubes, by pushing the vent 27 for several seconds so the waste line 28 is also sanitised. With the selector valve 11 switched to the beer dispense position, beer is dispensed, being delivered through the first portion 23 of the beer dispensing line 5 from the keg 4 through the first fob detector 20, through the selector valve 11 and then through the flowmeter 18 and the second portion 24 of the beer dispensing line 5 to the beer dispensing tap 6. The amount of beer dispensed is monitored by the flowmeter 18 and shown on the digital display 19.

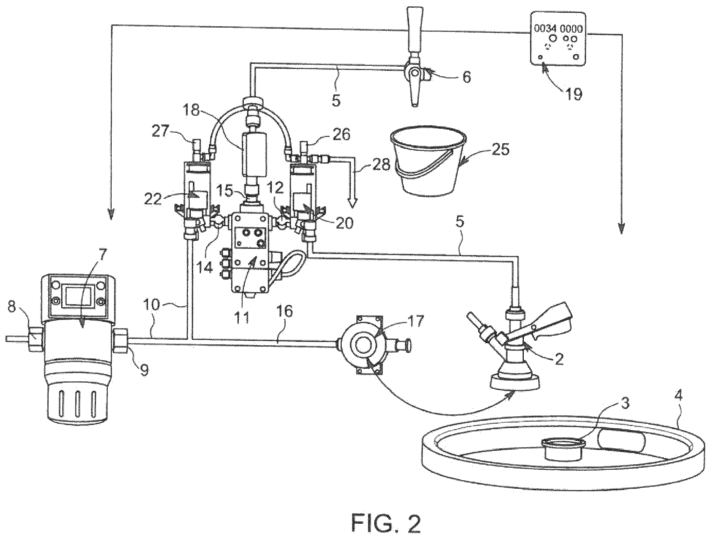

When the beer keg 4 is empty, the first fob detector 20 will close and a signal is sent to the selector valve 11 which closes the first inlet 12 and opens the second inlet 14 which is connected to the ozone water line 10. Simultaneously, the digital display 19 will change to show a red LED for empty keg 4 and start measuring the amount of ozone water going through the system. The remaining beer in the system 1 between the selector valve 11 and the beer dispensing tap 6 can still be dispensed until the ozone water mixture approaches the beer dispensing tap 6. The amount of beer dispensed will depend on the volume of the beer dispensing line 5 between the selector valve 11 and the beer dispensing tap 6. This volume can be displayed on the display 19 to indicate when beer dispensing should be terminated. Typically, beer amounting to about 90-95% of the volume of the second portion 24 of the beer dispensing line 5 between the selector valve 11 and the beer dispensing tap 6 can be dispensed as normal. Then the last of the beer and the ozone water can be discharged through the beer dispensing tap 6 into a bucket 25, for example, as shown in Fig. 2. This cleans the second portion 24 of the beer dispensing line 5 between the selector valve 11 and the beer dispensing tap 6.

The keg tapping head 2 is connected to the cleaning socket 17 and ozone water is delivered through the branch line 16 and ozone water is delivered through the first portion 23 of the beer dispensing line 5 between the tapping head 2 and the first fob detector 20 to remove any beer remaining in this first portion 23 of the beer dispensing line 5 and to circulate ozone water through this first portion 23 of the beer dispensing line 5 for cleaning the first portion 23 of the beer dispensing line 5. As ozone water is delivered through the beer dispensing line 5, an interior of the beer dispensing line 5 is sanitized. The venting of the fob detectors 20, 22 as described above is repeated in this sanitising mode.

The tapping head 2 is disconnected from the cleaning socket 17 and connected to the outlet 3 of a new keg 4 of beer. After switching the selector valve 11 to close the second inlet 14 and open the first inlet 12, beer can then be delivered through the beer dispensing line 5 from the beer keg 4 to the beer dispensing tap 6. After any remaining ozone water has been flushed through the beer dispensing line 5, beer can then be dispensed from the beer dispensing tap 6 as normal.

It will be appreciated that the beer line dispensing and cleaning system of the invention allows the beer dispensing line 5 to be flushed through with ozone water after every used keg 4 of beer. When the keg 4 is empty, the system 1 switches automatically over to the sanitization process. The remaining quantity of beer in the beer dispensing line 5 can be dispensed as the volume of beer can be seen on the digital display 19 in front of the barman. There is no waste because the beer is pushed out with water. When the beer dispensing line 5 is empty of beer, the barman runs the beer dispensing tap 6 for the predetermined volume which can be seen on the monitor of the remote display unit 19, closes the beer dispensing tap 6 and changes the empty keg 4 to a new keg 4 of beer.

After returning to the bar, the barman opens the beer dispensing tap 6 and lets the ozone water discharge from the beer dispensing tap 6 until fresh beer discharges from the beer dispensing tap 6. This he can monitor on the monitor of the remote display unit 19. Thus, advantageously, a new keg 4 of beer is dispensed in a fresh sanitized beer dispensing line 5 every time, and conveniently for breweries, they do not have to send out contractors every three or four weeks to sanitise the beer dispensing lines 5.

It will be appreciated that the system of the invention is environmentally friendly and does not use harmful chemicals. Beer dispensing lines are readily and regularly cleaned by bar staff without the need for brewery contractors. Each time a new keg 4 is connected to the beer dispensing line 5, it is connected to a sterile beer dispensing line 5.

While for simplicity and clarity the system of the invention has been described for a single beer dispensing line 5, in practice there will usually be a number of beer dispensing lines 5 in any establishment so that the electrolytic ozone generator 7 will be connected to a number of beer dispensing lines 5, each of which has a selector valve 11 to switch between beer dispensing mode and beer line sanitizing mode.

The terms "comprise" and "include", and any variations thereof required for grammatical reasons, are to be considered as interchangeable and accorded the widest possible interpretation.

The invention is not limited to the embodiments hereinbefore described which may be varied in both construction and detail within the scope of the appended claims.

## Claims

1. A beer line dispensing and cleaning system (1) comprising:
a keg tapping head (2) for attachment to a beer keg (4) outlet (3),
a beer dispensing line (5) connected between the keg tapping head (2) and a beer dispensing tap (6),
an ozone generator (7) having a water inlet (8) for connection to a water supply and an ozone water outlet (9) for connection by an ozone water line (10) to the beer dispensing line (5) for delivery of ozone water through the beer dispensing line (5),
a selector valve (11) mounted in the beer dispensing line (5), the selector valve (11) having a first inlet (12) connected to the keg tapping head (2) by the beer dispensing line (5), the selector valve (11) having a second inlet (14) connected to the ozone generator (7) by the ozone water line (10), and the selector valve (11) having an outlet (15) connected to the beer dispensing tap (6) by the beer dispensing line (5),
the selector valve (11) being switchable between a first operating position in which the first inlet (12) of the selector valve (11) is connected to the outlet (15) of the selector valve (11) and a second operating position in which the second inlet (14) of the selector valve (11) is connected to the outlet (15) of the selector valve (11),
a first fob detector (20) mounted in the beer dispensing line (5) between the keg tapping head (2) and the selector valve (11), and
a second fob detector (22) mounted in the ozone water line (10) between the ozone generator (7) and the selector valve (11).

2. The system (1) as claimed in claim 1, wherein the ozone water line (10) is connected to a cleaning socket (17) which is engagable with the keg tapping head (2).

3. The system (1) as claimed in claim 1 or claim 2, wherein a flowmeter (18) is mounted in the beer dispensing line (5).

4. The system (1) as claimed in claim 3, wherein the flowmeter (18) is mounted in the beer dispensing line (5) between the selector valve (11) and the beer dispensing tap (6).

5. The system (1) as claimed in claim 4, wherein the flowmeter (18) is mounted at the outlet (15) of the selector valve (11).

6. The system (1) as claimed in any one of claims 3 to 5, wherein the flowmeter (18) is connected to a remote display unit (19).

7. The system (1) as claimed in any preceding claim, wherein the first fob detector (20) is mounted at the first inlet (12) of the selector valve (11).

8. The system (1) as claimed in any preceding claim, wherein the second fob detector (22) is mounted at the second inlet (14) of the selector valve (11).

9. A beer line dispensing and cleaning system (1) for mounting in a beer dispensing line (5), comprising:
an ozone generator (7) having a water inlet (8) for connection to a water supply and an ozone water outlet (9) for connection by an ozone water line (10) to the beer dispensing line (5) for delivery of ozone water through the beer dispensing line (5),
a selector valve (11) for mounting in the beer dispensing line (5), the selector valve (11) having a first inlet (12) for connection to a beer keg (4) by the beer dispensing line (5), the selector valve (11) having a second inlet (14) connected to the ozone generator (7) by the ozone water line (10), and the selector valve (11) having an outlet (15) for connection to a beer dispensing tap (6) by the beer dispensing line (5),
the selector valve (11) being switchable between a first operating position in which the first inlet (12) of the selector valve (11) is connected to the outlet (15) of the selector valve (11) and a second operating position in which the second inlet (14) of the selector valve (11) is connected to the outlet (15) of the selector valve (11),
a first fob detector (20) mounted at the first inlet (12) of the selector valve (11), and
a second fob detector (22) mounted at the second inlet (14) of the selector valve (11).

10. The system (1) as claimed in claim 9, wherein the ozone water line (10) is connected to a cleaning socket (17) which is engagable with a keg tapping head (2) in the beer dispensing line (5).

11. The system (1) as claimed in claim 9 or claim 10, wherein a flowmeter (18) is mounted at the outlet (15) of the selector valve (11).

12. The system (1) as claimed in claim 11, wherein the flowmeter (18) is connected to a remote display unit (19).
